# EUROPEAN PATENT APPLICATION

(11) **EP 2 963 270 A1**
(43) Date of publication of application: **06.01.2016**
(21) Application number: 15173909.1
(22) Date of filing: 25.06.2015
(51) Int. Cl.: F02D 41/00, F02D 21/00, F02D 19/08

(54) **SYSTEMS AND METHODS FOR ENGINE CONTROL INCORPORATING FUEL PROPERTIES**

(30) Priority: 30.06.2014 US 201414320101
(71) Applicant: General Electric Company, Schenectady, NY 12345 (US)
(72) Inventor: SMITH, Ryan Thomas, Waukesha, WI Wisconsin 53188 (US); SORGE, Gregory Walter, Waukesha, WI Wisconsin 53188 (US); ZURLO, James Richard, Waukesha, WI Wisconsin 53188 (US)
(74) Representative: Williams, Andrew Richard

(57) **Abstract**

A method (50) includes receiving (54) a fuel composition analysis, deriving (56) a fuel index based on the fuel composition analysis, deriving (60) a control adjustment for a gas engine based on the fuel index, and applying (62) the control adjustment to an actuator of the gas engine.

## Description

### BACKGROUND

The subject matter disclosed herein relates to power generation systems such as engines. Specifically, the subject matter described below relates to systems and methods for adjusting a combustion engine in a power generation system based on certain fuel properties.

Power generation systems can be used for a variety of applications, such as agricultural and food processing systems, onsite power generation for commercial and industrial buildings, and landfills and wastewater treatment. A power generation system may include a combustion gas engine and an engine control system that oversees the operation of the combustion gas engine. The engine control system generally monitors and adjusts certain parameters of the gas engine. It would be beneficial to improve control of gas engine systems.

### BRIEF DESCRIPTION

Certain aspects commensurate in scope with the originally claimed invention are summarized below. These aspects are not intended to limit the scope of the claimed invention, but rather these aspects are intended only to provide a brief summary of possible forms of the invention. Indeed, the invention may encompass a variety of forms that may be similar to or different from the aspects set forth below.

In a first aspect, a method includes receiving a fuel composition analysis, deriving a fuel index based on the fuel composition analysis, deriving a control adjustment for a gas engine based on the fuel index, and applying the control adjustment to an actuator of the gas engine.

In a second aspect, a system includes a fuel repository that provides fuel, a gas engine fluidly coupled to the fuel repository and configured to receive the fuel and provide power, and a fuel composition analyzer fluidly coupled to the fuel repository. The fuel composition analyzer is configured to receive a sample of fuel from the fuel repository, analyze the sample of fuel, and generate a fuel composition analysis. The system also includes a fuel index calculator communicatively coupled to the fuel composition analyzer. The fuel index calculator has a processor configured to receive the fuel composition analysis and derive a fuel index based on the fuel composition analysis. The system further includes an engine control system communicatively coupled to the fuel index calculator. The engine control system includes a processor configured to receive the fuel index, derive a control adjustment to the gas engine based on the fuel index, and apply the control adjustment to an actuator of the gas engine.

In a third aspect, a tangible, non-transitory computer readable medium includes instructions. The instructions are configured to receive a fuel composition analysis, derive a fuel index based on the fuel composition analysis, derive a control adjustment for a gas engine based on the fuel index, and apply the control adjustment to an actuator of the gas engine.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a block diagram illustrating a power generation system including a gas engine system, in accordance with an embodiment of the present approach;
FIG. 2 is a block diagram illustrating an engine control system controlling the gas engine system of FIG. 1, in accordance with an embodiment of the present approach;
FIG. 3 is a block diagram illustrating a fuel index calculator within the power generation system of FIG. 1, in accordance with an embodiment of the present approach; and
FIG. 4 is a flow chart depicting a method of operation for the gas chromatograph, the fuel index calculator, and the engine control system within the power generation system of FIG. 1, in accordance with an embodiment of the present approach.

### DETAILED DESCRIPTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

Present embodiments relate to systems and methods for controlling an engine based on fuel composition. To determine the fuel composition, an operator performs a gas analysis on a sample of fuel to create a fuel composition analysis detailing the chemical constituents of the fuel. Before the techniques described hering, the operator may have entered the resulting data into a spreadsheet or database such as Excel, to calculate an index or rating that indicates fuel quality and composition. The systems and methods described herein relate to automating the creation of a fuel index that represents fuel composition or fuel quality and deriving control adjustments to an engine based on the fuel index. The fuel index may be calculated in substantially real-time, allowing a control system associated with the engine to derive control adjustments based on the fuel index in substantially real-time. Further, the fuel index may be a single number or ratio; accordingly, the latency and complexity of transmitting the fuel index between systems may be reduced compared to the latency and complexity of transmitting a complete fuel composition analysis. Additionally, the fuel index may be calculated by a separate device that may be installed on existing engine systems, or by software installed in the control system in existing engine systems.

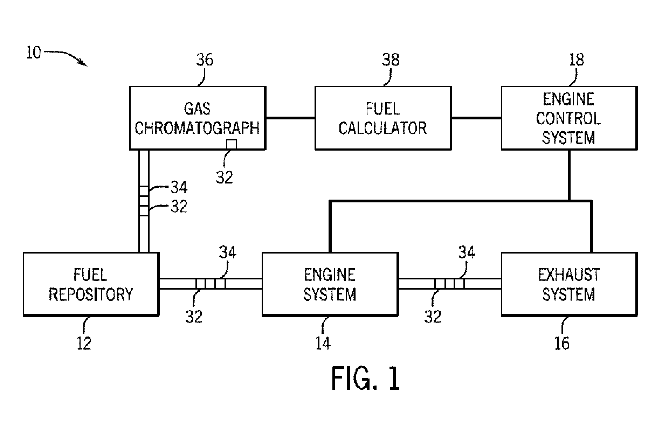

Turning now to FIG. 1, an embodiment of a power generation system 10 that may provide power for a variety of applications, such as agricultural and food processing systems and wastewater treatment, is illustrated. The power generation system 10 includes a fuel repository 12 that provides fuel to an engine system 14. The fuel repository 12 may be any suitable reservoir for storing and providing fuel, such as a wellhead or a tank. The engine system 14 is a combustion gas engine system and includes a gas engine such as a Waukesha™ gas engine available from the General Electric Company, of Schenectady, New York. Although the power generation system 10 is described as having a combustion gas engine, it should be noted that other types of engines and engine systems may be employed by the power generation system 10.

After the engine system 14 bums the fuel, an exhaust system 16 receives the exhaust gases from the engine system 14. The exhaust system 16 then performs various types of chemical processing on the exhaust gases before the exhaust gases are released outside of the power generation system 10. For example, the exhaust system 16 may include a catalytic converter system, such as a three-way catalyst, suitable for removing certain emissions before release of the exhaust gases to ambient.

The power generation system 10 further includes an engine control system 18, which oversees the operation of the power generation system 10. The engine control system 18 includes a processor 20; a memory 22; a display 24; a user input device 26; a communicative link 28 to other systems, components, and devices; and a hardware interface 30 suitable for interfacing with sensors 32 and actuators 34.

The sensors 32 may provide various data to the engine control system 18. For example, the sensors 32 may include oxygen sensors, rotational speed sensors, temperature sensors, pressure sensors, flow sensors, and the like, disposed at different locations in the engine system 14 and the power generation system 10. The actuators 34 may include valves, pumps, positioners, inlet guide vanes, switches, and the like, useful in performing control actions and disposed at different locations in the engine system 14 and the power generation system 10.

In one embodiment of the power generation system 10, the engine control system 18 may monitor fuel properties or fuel composition (e.g., chemical composition, such as a hydrocarbon composition). The engine control system 18 can use the fuel composition to determine a variety of useful derivations including ignition timing, emissions timing, the power and fuel performance of the engine system 14, the engine torque, and the air-to-fuel ratio (AFR).

To that end, the power generation system 10 may include a gas chromatograph 36, as depicted in FIG. 1. The depicted gas chromatograph 36 is a device that determines fuel composition and the relative or actual amounts of each chemical constituent of the fuel. Although the gas chromatograph 36 is described as a stand-alone device, in certain embodiments, the functionality of the gas chromatograph 36 may be part of the engine control system 18 (e.g., as part of a add-on card or other circuitry). Further, although the power generation system 10 is described as having a gas chromatograph, it should be appreciated that other types of fuel composition analyzers may be used (e.g., mass spectrometers).

The gas chromatograph 36 determines fuel composition and the relative or actual amounts of the chemical constituents of the fuel in substantially real-time. However, the fuel composition itself may not necessarily indicate the fuel quality. Further, in certain situations, the engine control system 18 may only use a portion of the fuel composition data relating to certain chemical constituents when determining control adjustments. For example, for certain control adjustments, the engine control system 18 may only use the carbon-hydrogen ratio of the fuel as input for certain derivations. To determine a representation of fuel quality or composition, the power generation system 10 may include a fuel index calculator 38, further described below.

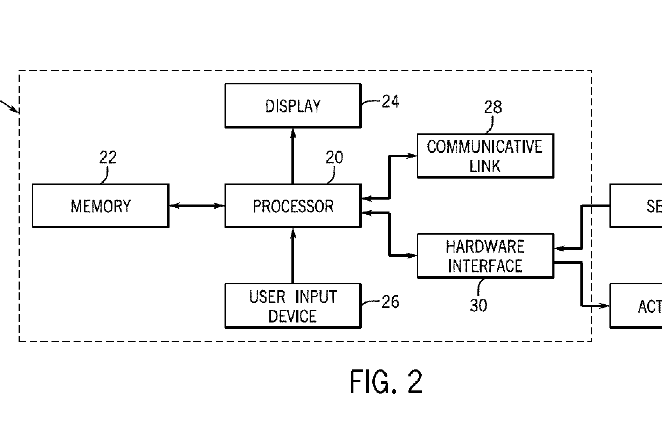

Turning now to FIG. 2, the figure is a block diagram for an embodiment of the engine control system 14 showing interconnections between various components or subsystems. The processor 20 may include, for example, general-purpose single- or multi-chip processors. In addition, the processor 20 may be any conventional special-purpose processor, such as an application-specific processor or circuitry. The processor 22 and/or other data processing circuitry may be operably coupled to the memory 24 to execute instructions for running the engine control system 18. These instructions may be encoded in programs or executable instructions that are stored in the memory 22, which may be an example of a tangible, non-transitory computer-readable medium, and may be accessed and executed by the processor 20. The instructions may include instructions to apply certain chemical analysis of fuel, as described herein, to derive one or more actions suitable for controlling the engine system 14.

The memory 22 may be a mass storage device, a FLASH memory device, removable memory, or any other non-transitory computer-readable medium. Additionally or alternatively, the instructions may be stored in an additional suitable article of manufacture that includes at least one tangible, non-transitory computer-readable medium that at least collectively stores these instructions or routines in a manner similar to the memory 22 as described above. The display 24 enables a user to view various data regarding the engine system 14 and, to a certain extent, the power generation system 10. The user input device 26 allows the user (e.g., engine operator) to interact with the engine control system 16. The communicative link 28 may be a wired (e.g., a wired telecommunication infrastructure or a local area network employing Ethernet) or wireless (e.g., a cellular network or an 802.11x Wi-Fi network) connection between the engine control system 18 and other systems (e.g., the gas chromatograph 36), components, and devices.

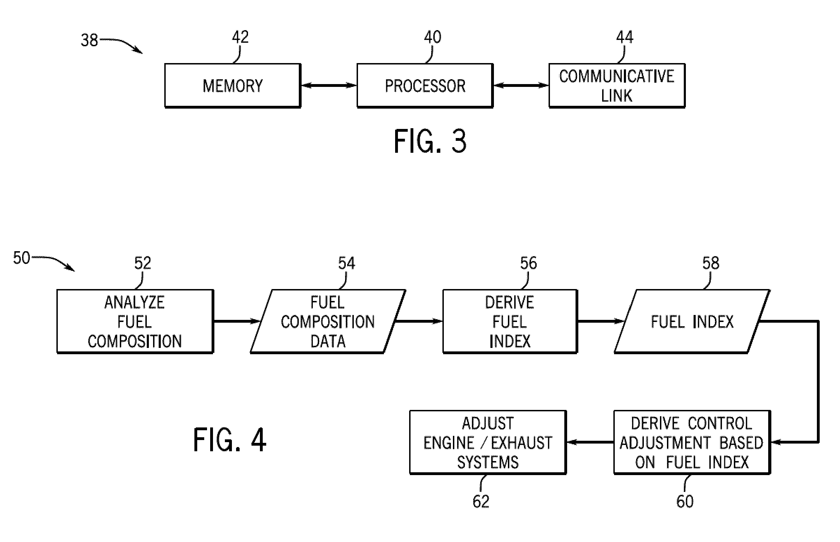

Turning now to FIG. 3, the power generation system 10 may include a fuel index calculator 38, as mentioned above. The fuel index calculator 38 may derive one or more fuel indices based on a fuel composition analysis produced by the gas chromatograph 36. The fuel indices may be any single number or ratio that represents the fuel quality or the fuel composition. For example, the fuel index may be the methane number (MN) or the carbon-hydrogen ratio of the fuel. Alternately or additionally, the fuel index may include a knock resistance rating, which may be determined by models that estimate the "knock" (e.g., fuel self-ignition) characteristics of fuel having various fuel compositions. In other embodiments, the fuel index may be a knock resistance rating determined by algorithms that use models but include alternative methods to determine the knock resistance rating if the fuel composition falls outside of the ranges predicted by the models. In such embodiments, the models and algorithms used to calculate the knock resistance rating may be based on other fuel indices, such as the methane number or the carbon-hydrogen ratio.

The fuel indices may include a Waukesha Knock Index (WKI), which may be calculated via software such as Waukesha's Windows™ based WKI software available from General Electric Company, of Schenectady, New York, using, for example, a nine-gas mix matrix as input. Additionally or alternatively, the fuel indices may include a knock resistance rating derived via models or calibration curves as described in U.S. Patent No. 6,061,637 by Sorge et al., incorporated by reference in its entirety herein. For example, an algorithm may consider concentrations of the following molar constituents: methane (60%-100%); ethane (0%-20%); propane (0%-40%);normal-butane (0%-10%); normal-pentane (0%-3%); mixture of hexane and heptane (0%-2%); nitrogen (0%-15%);and carbon dioxide (0%-10%). For samples having gas constituent concentrations lying within expected limits, the algorithm is implemented in the following manner. First, concentrations of non-hydrocarbon combustibles such as hydrogen, carbon monoxide, hydrogen sulfide, etc., are temporarily removed from the analysis, and the concentration values of the above listed modeled constituents (e.g., .gaseous hydrocarbon combustibles, carbon dioxide and nitrogen) are normalized. It has been found that isomers of butane (iso-butane) and pentane (iso-pentane) affect knock resistance differently than normal-pentane and normal butane. Therefore, it is desirable to account for these isomer constituents by: 1) assigning approximately 58% of the iso-butane concentration to the propane concentration and approximately 42% of the iso-butane concentration to the n-butane concentration; and 2) assigning approximately 68% of the iso-pentane concentration to the n-butane concentration and approximately 32% of the iso-pentane concentration to the n-pentane concentration. The adjusted and normalized concentration values for the modeled constituents of the sample (e.g. the gaseous hydrocarbon combustibles, carbon dioxide, and nitrogen) are processed through empirical models to determine a preliminary knock resistance rating. The preliminary knock resistance rating is then adjusted for non-hydrocarbon combustibles, such as hydrogen, in a manner consistent with the conventional methane number (MN) test.

As illustrated in FIG. 3, the fuel index calculator 38 includes a processor 40, memory 42, and a communicative link 44. The processor 40, memory 42, and the communicative link 44 may be similar to the processor 20, the memory 22, and the communicative link 28 respectively. As mentioned earlier, the fuel index calculator 38 may be coupled to the gas chromatograph 36 and the engine control system 18, such that the fuel index calculator 38 receives data (i.e., a fuel composition analysis) from the gas chromatograph 36 and sends data (i.e., one or more fuel indices) to the engine control system 18. However, in other embodiments, the fuel index calculator 38 may be included in the engine control system 18. In still other embodiments, the fuel index calculator 38 may be included in the gas chromatograph 36

FIG. 4 depicts an embodiment of a process 50 suitable for operations of the gas chromatograph 36, the fuel index calculator 38, and the engine control system 18. Although the process 50 is described below in detail, the process 50 may include other steps not shown in FIG. 4. Additionally, the steps illustrated may be performed concurrently or in a different order. Further, while the steps are described below as being performed by a particular device or system, it should be appreciated that the steps may be performed by another device or system equipped with the necessary functionality. The process 50 may be implemented as executable code stored in memories 22, 42 and executable by processors 20, 40.

Beginning at block 52, the process 50 may direct the gas chromatograph 36 to analyze the fuel and to generate a fuel composition analysis 54. The gas chromatograph 36 may take one or more samples of fuel from the fuel repository 12 for analysis. For example, an average sample may be taken every 1 to 1000 milliseconds, 1 second to 1 minute, 1 minute to 10 minutes, three to five minutes, and so on. The process 50 may then direct for the fuel sample to be injected into a carrier gas stream that passes through a narrow tube (e.g., called the "column"). Different chemical constituents of the fuel sample pass through the column at different rates based on their various chemical and physical properties and their interactions with the specific column material (e.g., glass, plastic). As the different chemical constituents exit the column, a detector (e.g., flame ionization detector, thermal conductive detector, catalytic combustion detector, etc.) detects the type and amount of the chemical constituents. The gas chromatograph 38 then generates the fuel composition analysis 54 which includes a listing of each chemical constituent in the fuel as well as the relative or actual amount of each chemical constituent, as mentioned above.

Next, at block 56, process 50 may direct the fuel index calculator 38 to derive one or more fuel indices 58 based on the fuel composition analysis 54. The process 50 may then direct the fuel index calculator 38 to send the fuel index 58 to the engine control system 18, which may derive control adjustments for the engine system 14 based on the fuel index 58 at block 60. For example, as mentioned above, the engine control system 18 may determine ignition timing, emissions timing, the power and fuel performance of the engine system 14, the engine torque, and the air-to-fuel ratio based in part on the fuel composition. For instance, using the fuel index 58, the engine control system 18 may detect an increase in the methane number of the fuel, which may prompt the engine control system 18 to change emissions timing. Finally, at block 62, the engine control system 18 applies the control adjustment to the engine system 14. For example, to adjust the engine torque, the engine control system 18 may adjust the inlet guide vanes (i.e., actuators 32) of a torque converter within the engine system 14 that provides power to the gas engine. In another instance, the engine control system 18 may adjust a throttle within the engine system 14 to change the amount of air or fuel provided to the gas engine, thereby adjusting the air-to-fuel ratio.

As noted above, the gas chromatograph 36 takes and analyzes samples of fuel every three to five minutes on average. That is, the fuel composition analysis 54 may be generated in substantially real-time. As a result, the fuel index 58 may be calculated in substantially real-time. As such, the engine control system 18 may optimize certain parameters in real-time based on the fuel index 58. This may prove especially advantageous for applications in which the power generation system 10 uses multiple types of fuel that vary in quality or composition. Further, since the fuel index 58 may be a single number or ratio, the latency and complexity of transmitting the fuel index 58 between systems may be reduced compared to the latency and complexity of transmitting the complete fuel composition analysis 54.

Additionally, as mentioned above, the fuel index calculator 38 may be a separate device or software installed in the engine control system 18 or the gas chromatograph 36. Accordingly, the fuel index calculator 38, as a device or a software component, may be easily installed in existing power generation systems. As will be appreciated, the technical effects and technical problems described above in the specification are exemplary and not limiting. It should be noted that the embodiments described in the specification may have other technical effects and can solve other technical problems.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A method, comprising:
   receiving a fuel composition analysis;
   deriving a fuel index based on the fuel composition analysis;
   deriving a control adjustment for a gas engine based on the fuel index; and
   applying the control adjustment to an actuator of the gas engine.
2. The method of clause 1, wherein the fuel index is a knock resistance rating, a Waukesha Knock Index, a methane number, or a carbon-hydrogen ratio.
3. The method of any preceding clause, wherein deriving the knock resistance rating comprises using a model based on a plurality of methane numbers (MNs) associated with a plurality of fuel compositions, an algorithm incorporating the model, or a combination thereof.
4. The method of any preceding clause, wherein the control adjustment comprises an adjustment to ignition timing of the gas engine, an adjustment to an air-to-fuel ratio of the gas engine, an adjustment to a torque of the gas engine, an adjustment to a power performance of the gas engine, or an adjustment to a fuel performance of the gas engine.
5. The method of any preceding clause, further comprising receiving a sample of fuel and analyzing the sample of fuel to generate the fuel composition analysis.
6. The method of any preceding clause, wherein the fuel composition analysis comprises a listing of each chemical constituent of the sample of fuel and a relative amount of each chemical constituent of the sample of fuel.
7. A system, comprising:
   a fuel repository that provides fuel;
   a gas engine fluidly coupled to the fuel repository and configured to receive the fuel and provide power;
   a fuel composition analyzer fluidly coupled to the fuel repository and configured to:
      receive a sample of fuel from the fuel repository;
      analyze the sample of fuel; and
      generate a fuel composition analysis;
      a fuel index calculator communicatively coupled to the fuel composition analyzer and having a processor configured to:
         receive the fuel composition analysis; and
         derive a fuel index based on the fuel composition analysis; and
         an engine control system communicatively coupled to the fuel index calculator and comprising a processor configured to:
            receive the fuel index;
            derive a control adjustment to the gas engine based on the fuel index; and
            apply the control adjustment to an actuator of the gas engine.
8. The system of any preceding clause, wherein the fuel index is a knock resistance rating, a methane number, or a carbon-hydrogen ratio.
9. The system of any preceding clause, wherein the fuel index calculator derives the knock resistance rating using a model based on a plurality of methane numbers for a plurality of fuel compositions, an algorithm incorporating the model, or a combination thereof.
10. The system of any preceding clause, wherein the control adjustment comprises an adjustment to ignition timing of the gas engine, an adjustment to an air-to-fuel ratio of the gas engine, an adjustment to a torque of the gas engine, an adjustment to a power performance of the gas engine, or an adjustment to a fuel performance of the gas engine.
11. The system of any preceding clause, wherein the fuel composition analyzer is a gas chromatograph.
12. The system of any preceding clause, wherein the engine control system comprises the fuel index calculator.
13. The system of any preceding clause, wherein the fuel composition analyzer comprises the fuel index calculator.
14. The system of any preceding clause, further comprising an exhaust system fluidly coupled to the gas engine.
15. The system of any preceding clause, wherein the control adjustment is an adjustment to emissions timing.
16. The system of any preceding clause, wherein the fuel composition analysis comprises a listing of each chemical constituent of the sample of fuel and a relative amount of each chemical constituent of the sample of fuel.
17. A tangible, non-transitory computer readable medium, comprising instructions configured to:
   receive a fuel composition analysis;
   derive a fuel index based on the fuel composition analysis;
   derive a control adjustment for a gas engine based on the fuel index; and
   apply the control adjustment to an actuator of the gas engine.
18. The tangible, non-transitory computer-readable medium of any preceding clause, wherein the fuel index is a knock resistance rating, a methane number, or a carbon-hydrogen ratio.
19. The tangible, non-transitory computer-readable medium of any preceding clause, wherein deriving the knock resistance rating comprises using a model based on methane numbers for a range of fuel compositions, an algorithm incorporating the model, or a combination thereof.
20. The tangible, non-transitory computer-readable medium of any preceding clause, further comprising instructions configured to receive a sample of fuel, analyze the sample of fuel, and generate the fuel composition analysis.

## Claims

1. A method (50), comprising:
receiving (54) a fuel composition analysis;
deriving (56) a fuel index based on the fuel composition analysis;
deriving (60) a control adjustment for a gas engine based on the fuel index; and
applying (62) the control adjustment to an actuator of the gas engine.

2. The method (50) of claim 1, wherein the fuel index (56) is a knock resistance rating, a Waukesha Knock Index, a methane number, or a carbon-hydrogen ratio.

3. The method (50) of claim 2, wherein deriving the knock resistance rating comprises using a model based on a plurality of methane numbers (MNs) associated with a plurality of fuel compositions, an algorithm incorporating the model, or a combination thereof.

4. The method (50) of any preceding claim, wherein the control adjustment (62) comprises an adjustment to ignition timing of the gas engine, an adjustment to an air-to-fuel ratio of the gas engine, an adjustment to a torque of the gas engine, an adjustment to a power performance of the gas engine, or an adjustment to a fuel performance of the gas engine.

5. The method (50) of any preceding claim, further comprising receiving a sample of fuel and analyzing (52) the sample of fuel to generate the fuel composition analysis.

6. The method (50) of claim 5, wherein the fuel composition analysis comprises a listing of each chemical constituent of the sample of fuel and a relative amount of each chemical constituent of the sample of fuel.

7. A system (10), comprising:
a fuel repository (12) that provides fuel;
a gas engine (14) fluidly coupled to the fuel repository and configured to receive the fuel and provide power;
a fuel composition analyzer (36) fluidly coupled to the fuel repository and configured to:
receive a sample of fuel from the fuel repository (12);
analyze the sample of fuel; and
generate a fuel composition analysis;
a fuel index calculator (38) communicatively coupled to the fuel composition analyzer (36) and having a processor configured to:
receive the fuel composition analysis; and
derive a fuel index based on the fuel composition analysis; and
an engine control system (18) communicatively coupled to the fuel index calculator (38) and comprising a processor configured to:
receive the fuel index;
derive a control adjustment to the gas engine based on the fuel index; and
apply the control adjustment to an actuator of the gas engine.

8. The system (10) of claim 7, wherein the fuel index is a knock resistance rating, a methane number, or a carbon-hydrogen ratio.

9. The system (10) of claim 8, wherein the fuel index calculator (38) derives the knock resistance rating using a model based on a plurality of methane numbers for a plurality of fuel compositions, an algorithm incorporating the model, or a combination thereof.

10. The system (10) of any of claims 7 to 9, wherein the control adjustment comprises an adjustment to ignition timing of the gas engine, an adjustment to an air-to-fuel ratio of the gas engine, an adjustment to a torque of the gas engine, an adjustment to a power performance of the gas engine, or an adjustment to a fuel performance of the gas engine.

11. The system (10) of any of claims 7 to 10, wherein the fuel composition analyzer (36) is a gas chromatograph.

12. The system (10) of any of claims 7 to 11, wherein the engine control system (18) comprises the fuel index calculator.

13. The system (10) of any of claims 7 to 12, wherein the fuel composition analyzer (36) comprises the fuel index calculator.

14. The system (10) of any of claims 7 to 13, further comprising an exhaust system (16) fluidly coupled to the gas engine (14).

15. A tangible, non-transitory computer readable medium, comprising instructions configured to:
receive a fuel composition analysis;
derive a fuel index based on the fuel composition analysis;
derive a control adjustment for a gas engine based on the fuel index; and
apply the control adjustment to an actuator of the gas engine.
